# EUROPEAN PATENT APPLICATION

(11) **EP 2 030 670 A1**
(43) Date of publication of application: **04.03.2009**
(21) Application number: 07115443.9
(22) Date of filing: 31.08.2007
(51) Int. Cl.: B01D 53/46, B01D 53/52, B01D 53/64, A62D 3/30

(54) **Method and apparatus for removing at least one hydrogen chalcogen compound from an exhaust gas stream**

(71) Applicant: Intega GmbH, 82041 Oberhaching (DE)
(72) Inventor: Krüger, Ulrich, 44269, Dortmund (DE)
(74) Representative: Kahlhöfer, Hermann

(57) **Abstract**

A method for removing at least one hydrogen chalcogen compound being in gaseous state at standard conditions from an input exhaust gas stream is proposed comprising the steps of
- guiding the input exhaust gas stream into an aqueous environment;
- supplying at least one base to the aqueous environment and
- extracting an output exhaust gas stream from the aqueous environment.
According to the invention the amount of base supplied is controlled such that the pH-value of the environment is larger than 11.

The apparatus (1) and the method according to the present invention allow the efficient removal of hydrogen chalcogen compounds from exhaust gases in particular exhaust gases of the production processes of semiconductor compounds like e. g. photovoltaic modules.

## Description

Subject matter of the present invention is a method and an apparatus for removing at least one hydrogen chalcogen compound being in gaseous state at standard conditions from an input gas stream. The preferred field of use for the present invention is the cleaning of exhaust gases or product gases used in the production of wafers and/or semiconductors such as e.g. the production of solar cells.

When producing wafers and in particular solar modules often product gases like e.g. hydrogen sulphide (H₂S) or hydrogen selenide (H₂Se) are used as product gases for providing donor ions to the wafer substrate. The exhaust gases of such production sites comprise toxic compounds like e.g. hydrogen sulphide or hydrogen selenide have to be removed. Usually the exhaust comprising hydrogen sulphide and/or hydrogen selenide is treated with caustic solutions like e.g. sodium hydroxide (NaOH) with added oxidizers like hydrogen peroxide (H₂O₂) and/or sodium hypochlorite (NaOCl). These oxidizers convert one product (e.g. sodium sulphide (Na₂S)) of the reaction of hydrogen sulphide with sodium hydroxide (NaOH) by converting the Na₂S to sodium sulfate (Na₂SO₄).

This means for to remove these hydrogen chalcogen compounds from the exhaust gas of production plants it is necessary to use and store several chemicals like e. g. sodium hydroxide, hydrogen peroxide and/or sodium hypochlorite. The chemical compounds and in particular the oxidizers like hydrogen peroxide have to be stored under controlled conditions with respect to e. g. the formation of oxygen and possible corrosion of tanks. Furthermore, stocks of several chemical compounds have to be supervised. Furthermore, stock keeping and the expenses therefore are increased.

Based on this, it is an object of the present invention to at least partly solve the problems of prior art in particular in terms of using less kinds of chemicals.

These objects are accomplished by a method and an apparatus having the features of the independent claims. The respective dependent claims are directed to improvements of the method and the apparatus.

The method for removing at least one hydrogen chalcogen compound being in gaseous state at standard conditions from an input exhaust gas stream comprises the following steps:
- guiding the input exhaust gas stream into an aqueous environment;
- supplying at least one base to the aqueous environment and
- extracting an output exhaust gas stream from the aqueous environment.
According to the invention, the amount of base supplied is controlled such that the pH-value of the solution is larger than 11.

Standard conditions are standard ambient temperature and pressure like e.g. a temperature of 298,15 K (Kelvin) and a pressure of 1 bar. It is understood that chalcogens are elements of the periodic table group 16 (former group VIA) in the table of periodic elements. The chalcogens and their group consist in particular of the elements oxygen, sulphur, selenium, tellurium, polonium, and unuhexium. The term "hydrogen chalcogen compound" is in particular understood such that it comprises hydrogen sulphide, hydrogen selenide and/or hydrogen tellurite. Hydrogen chalcogen compounds are in particular chalcogenides. The hydrogen chalcogen compounds being in gaseous state at standard conditions are in particular all hydrogen chalcogenides with the exception of water.

The method according to the invention is in particular performed in a so-called wet scrubber. In particular the input exhaust gas stream is brought into contact with the base as the scrubbing liquid by spraying it with the scrubbing liquid, by forcing the gas through a pool of the scrubbing liquid or by other contact methods. It is preferred that the input exhaust stream is forced through a pool of an aqueous solution forming the aqueous environment.

As an example the chemical reactions for the hydrogen chalcogen compound hydrogen sulphide (H₂S) are given:

H₂S + NaOH ↔ NaHS + H₂O (1.1)

NaHS + NaOH ↔ Na₂S + H₂O pH<11 (1.2)

H₂S + NaOH → NaHS + H₂O (2.1)

NaHS + NaOH → Na₂S + H₂O pH>11 (2.2)

The chemical reactions follow equations (2.1) and (2.2) for pH-values greater than 11 whereas the reactions follow equations (1.1) and (1.2) for pH-values less than 11. The reactions for the respective other hydrogen chalcogen compounds are analogous. It was found when controlling the pH-value of the aqueous solution according to the present invention that if it is above 11 that the reaction (2.1) is substantially suppressed. Therefore it is possible without adding a further chemical compound like an oxidizer to suppress the reverse reaction of reaction (2.1). This means that by use of only one chemical compound which is a base like sodium hydroxide it is possible to fully remove the hydrogen chalcogen compound from the input exhaust stream. Under a complete removal of the hydrogen chalcogen compound it is understood that more than 99 wt.-% (weight-%) of the hydrogen chalcogen compound are removed from the input exhaust stream, in particular more than 99.9 wt.-% or even more than 99.99 wt.-%. It is not necessary to keep stocks and control the stocks of further chemicals like oxidizers. This easies the procedure of removing the hydrogen chalcogen compound from the input exhaust stream and lowers the expenses when using this method.

According to an improvement of the method according to the invention, the hydrogen chalcogen compounds comprise compounds of at least one of the following elements:
a) sulphur (S);
b) selenium (Se);
c) tellurium (Te) and
d) polonium (Po).

The method according to the present invention is particular advantageous for the removal of hydrogen compounds with one of the elements mentioned above. In particular, the removal of hydrogen sulphide and hydrogen selenide which are the hydrogen chalcogen compounds of sulphur and selenium which are often used as process gases in the semiconductor industries was achieved with a very high level of removal.

According to a further improvement of the method according to the invention, the supply of the base is controlled such that the pH-value of the environment is larger than 11.5.

It is preferred to constantly reach a pH-value of up to 12 and more within the aqueous environment as this leads to particularly high degrees of removal of the hydrogen chalcogen compounds.

According to a further improvement of the method according to the present invention, the base comprises at least one of the following compounds:
a) sodium hydroxide (NaOH) and
b) potassium hydroxide (KOH).

These bases and in particular sodium hydroxide allow the control of the pH-value to be above 11 and in particular above 11.5 or above 12. These bases and in particular mixtures of at least two of these bases allow in an easy way the complete removal of hydrogen chalcogen compounds from the input exhaust stream.

According to a further improvement of the present invention the base is at least in part introduced as droplets.

This can be done by using a respective nozzle to introduce the droplets. It is particularly preferred to introduce the base in such a way that a good degree of mixture of the base with the aqueous environment is gained.

According to a further improvement of the present invention droplets of at least two diameters are introduced.

It is preferred that the base is supplied in two stages. In a first stage droplets of a first diameter and in a subsequent second stage droplets of a second smaller diameter can be introduced. The larger droplets allow the supply of a rather large amount of base to the aqueous environment with the possibility of a large increase of the pH-value whereas the smaller droplets are mixed homogeneously with the aqueous environment.

According to a further improvement of the method according to the present invention a gas comprising oxygen is introduced into the aqueous environment.

It is understood that the gas comprising oxygen can be ambient air, pure oxygen or a mixture of oxygen with at least one other gas like e. g. nitrogen. By the introduction of oxygen in particular the removal of hydrogen selenide is improved as the oxygen promotes the oxidation of hydrogen selenide to red amorphous selenium. The introduction of a gas comprising oxygen can be realised independently of the introduction of the base.

According to another aspect of the present invention a method for manufacturing semiconductor components using a process gas comprising at least one hydrogen chalcogen compound being in gaseous state at standard conditions is proposed wherein the hydrogen chalcogen compounds of process gas are removed with a method according to invention.

The semiconductor components comprise in particular wafers, photovoltaic circuits and/or thin film photovoltaic circuits.

According to another aspect of the present invention an apparatus for removing at least one hydrogen chalcogen compound being in gaseous state at standard conditions from an input exhaust gas stream is proposed comprising a wet scrubber unit for an aqueous environment comprising means for controlling the pH-value of the aqueous environment at a level greater than 11. The apparatus can in particular be operated according to the inventive method.

According to an improvement of the apparatus according to the present invention the apparatus comprises means for the controlled supply of at least one base.

According to a further improvement of the apparatus the means for the controlled supply of at least one base comprise at least one nozzle.

In the following the invention is further described by way of example with reference to the single accompanying drawing which schematically displays an apparatus according to the present invention.

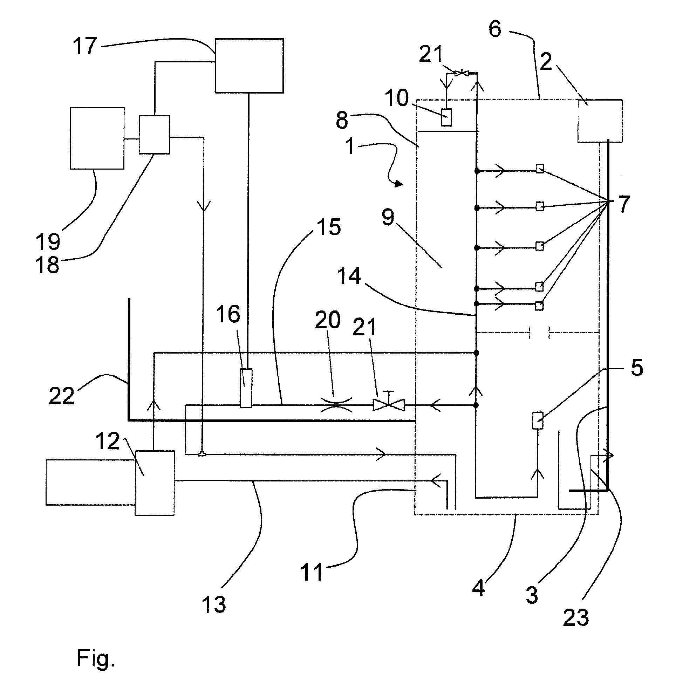

The only figure displays schematically an apparatus 1 for removing hydrogen chalcogen compounds being in gaseous state at standard conditions from an input exhaust gas stream. This apparatus 1 can be understood as a wet scrubber. The input exhaust gas stream enters apparatus 1 at exhaust gas inlet 2 and is passed via exhaust inlet line 3 to a first cleaning chamber 4. In this first cleaning chamber 4 an aqueous solution comprising at least one base is introduced via first nozzle 5. The first cleaning chamber 4 as well as a second cleaning chamber 6 comprise an aqueous environment to which the input exhaust gas stream is introduced. The first nozzle 5 is designed such that rather large amounts of the aqueous solution in particular in the form of droplets can be supplied.

The aqueous solution is circulated within the apparatus 1 and passes from the first cleaning chamber 4 to the second cleaning chamber 6. In the second cleaning chamber 6 aqueous solution comprising at least one base like sodium hydroxide is introduced via several second nozzles 7 allowing a dosing of smaller quantities than the first nozzle 5 and a more homogeneous mixture of the base added via the second nozzles 7 and the aqueous environment already present in the second cleaning chamber 6.

After passing the second cleaning chamber 6 the aqueous solution comprising the exhaust enters a third cleaning chamber 8 comprising a packed bed reactor 9. The aqueous solution is introduced into the third cleaning chamber 8 via a third nozzle 10.

The aqueous solution introduced via the third nozzle 10 flows through the packed bed reactor 9 comprising a bed of parts made preferably of plastic, in particular having a large surface area like e. g. beads, rings and/or spheres. In particular parts sold by e. g. Raschig AG under the tradenames Pall rings, Ralu rings, Raschig rings, berl saddles or the like can advantageously be used to for the packed bed reactor 9.

The aqueous solution is then collected in the sump 11 of the third cleaning chamber 8. From the sump 11 the aqueous solution is extracted using a recirculation pump 12. This recirculation pump 12 situated in a recirculation line 13 maintains the flow of the aqueous solution through the cleaning chambers 4, 6, 8 and in the supply line system 14 by which aqueous solution is supplied to the nozzles 5, 7, 10. By the recirculation line 13 and the recirculation pump 12 a pressure difference is created in the supply line system 14 which drives a flow of the aqueous solution through a control line 15 comprising a pH sensor 16 controlling the pH-value of the aqueous solution within the control line 15. The pH sensor 16 is connected to means 17 for controlling the pH-value. These means 17 are furthermore connected to a dosing pump 18 for dosing a solution of sodium hydroxide from a reservoir 19 to the control line 15. By this the pH value of the aqueous solution can be controlled according to the invention to be larger than 11.5, in particular larger than 12.

The control line 15 further comprises a flow restrictor 20 for to restrict the flow in the control line 15 to be less than a predeterminable upper value. The apparatus 1 comprises furthermore several valves 21 which can be used to control the flow of the aqueous solution through the apparatus 1. The cleaned exhaust gas stream is released from the apparatus via exit line 22. The sump 11 is emptied via the drain line 23.

The apparatus 1 and the method according to the present invention allow the efficient removal of hydrogen chalcogen compounds from exhaust gases in particular exhaust gases of the production processes of semiconductor compounds like e. g. photovoltaic modules.

### Reference numerals

- 1: apparatus for removing hydrogen chalcogen compounds from an exhaust
- 2: exhaust gas inlet
- 3: exhaust inlet line
- 4: first cleaning chamber
- 5: first nozzle
- 6: second cleaning chamber
- 7: second nozzle
- 8: third cleaning chamber
- 9: packed bed reactor
- 10: third nozzle
- 11: sump
- 12: recirculation pump
- 13: recirculation line
- 14: supply line system
- 15: control line
- 16: pH sensor
- 17: means for controlling the pH value
- 18: dosing pump
- 19: reservoir
- 20: flow restrictor
- 21: valve
- 22: exit line
- 23: drain line

## Claims

1. Method for removing at least one hydrogen chalcogen compound being in gaseous state at standard conditions from an input exhaust gas stream by
- guiding the input exhaust gas stream into an aqueous environment;
- supplying at least one base to the aqueous environment and
- extracting an output exhaust gas stream from the aqueous environment,
**characterized in that** the amount of base supplied is controlled such that the pH-value of the environment is larger than 11.

2. Method according to claim 1, wherein the hydrogen chalcogen compounds comprise compounds of at least one of the following elements:
a) sulfur (S);
b) selenium (Se);
c) tellurium (Te); and
d) polonium (Po).

3. Method according to one of the preceding claims, wherein the supply of the base is controlled such that the pH-value of the environment is larger than 11.5.

4. Method according to one of the preceding claims, wherein the base comprises at least one of the following compounds:
a) sodium hydroxide (NaOH) and
b) potassium hydroxide (KOH).

5. Method according to one of the preceding claims, wherein the base is at least in part introduced as droplets.

6. Method according to claim 5, wherein droplets of at least two diameters are introduced.

7. Method according to one of the preceding claims, wherein a gas comprising oxygen is introduced into the aqueous environment.

8. Method for manufacturing semiconductor components using a process gas comprising at least one hydrogen chalcogen compound being in gaseous state at standard conditions, wherein the hydrogen chalcogen compounds of process gas are removed with a method according to one of the preceding claims.

9. Apparatus (1) for removing at least one hydrogen chalcogen compound being in gaseous state at standard conditions from an input exhaust gas stream, in particular according to a method according to one of claims 1 to 7, comprising a wet scrubber unit for an aqueous environment, **characterized by** means (17) for controlling the pH-value of the aqueous environment at a level greater than 11.

10. Apparatus (1) according to claim 9, further comprising means for the controlled supply of at least one base.

11. Apparatus (1) according to claim 10, wherein the means for the controlled supply of at least one base comprise at least one nozzle (5, 7, 10).
